# EUROPEAN PATENT APPLICATION

(11) **EP 4 332 824 A1**
(43) Date of publication of application: **06.03.2024**
(21) Application number: 22193634.7
(22) Date of filing: 02.09.2022
(51) Int. Cl.: G06F 40/42, G06N 20/00, B60W 60/00, G06F 40/289

(54) **SYSTEM AND METHOD FOR TRANSLATING NATURAL LANGUAGE TRAFFIC RULES INTO FORMAL LOGIC FOR AUTONOMOUS MOVING VEHICLES**

(71) Applicant: Continental Automotive Technologies GmbH, 30165 Hannover (DE)
(72) Inventor: Dr. Bär, Daniel, 90411 Nürnberg (DE); Schön, Raffael, 90411 Nürnberg (DE); Manas, Kumar, 90411 Nürnberg (DE); Dr. Zwicklbauer, Stefan, 90411 Nürnberg (DE)
(74) Representative: Continental Corporation

(57) **Abstract**

The invention relates to a system and method for translating natural language traffic rules into formal logic including a training method for a machine learning system and can be used in the context of advanced driver assistance systems or autonomous driving systems (ADAS or AD) for vehicles or other autonomous moving vehicles like robots and drones.

A method for method for preparing a machine learning system for translating natural language traffic rules into formal logic representations for autonomous moving (or driving) vehicles. The machine learning system comprises a (large) pre-trained language model which has been trained on large volumes of text data to assign probabilities to sequences of words. The machine learning system is prepared by one of the following alternatives:
i. The pre-trained language model is used for prompting in the following way:
- input for the pre-trained language model are natural language instructions and language traffic rules,
- a number of inputs and corresponding formal logic target outputs are presented as (few shot) examples to the machine learning system so that the machine learning system will learn to generate a formal logic traffic rule when prompted with natural language instructions and a natural language traffic rule.

ii. The machine learning system is fine-tuned using training data comprising language traffic rules as training input and corresponding formal logic traffic rules as target output for the pre-trained language model (or the machine learning system, respectively).

The language traffic rules comprise natural language rules and/or synthetic language traffic rules.

## Description

The invention relates to a system and method for translating natural language traffic rules into formal logic including a training method for a machine learning system and can be used in the context of advanced driver assistance systems or autonomous driving systems (ADAS or AD) for vehicles or other autonomous moving vehicles (AVs) like robots and drones.

DE 10 2004 019337 A1 shows an assistance system for motor vehicles, in particular a right-of-way assistant. The assistance system includes at least one control unit, which selects data and which simultaneously processes from at least three groups of data streams: global data, e.g. navigation system information, local data provided from e.g. ADAS sensors and internal data provided from vehicle sensors, e.g. providing information input from the driver e.g. via a steering wheel interaction. For the right-of-way assistant to assist the driver, prior knowledge about the traffic rules is crucial. There are some examples given who has the right of way in specific situations according to legislation and, e.g. traffic signs or traffic lights available at an intersection.

US 8,452,524 B2 presents a method for recognizing traffic-related information in a driving motor vehicle, in which sensor data from a sensor and map data from a navigation system are interpreted for recognition purposes. The sensor data is inspected in a first scene interpretation for the presence of traffic-related information and is compacted to relevant sensor data. The map data is inspected in a second scene interpretation for the presence of traffic-related information and is compacted to relevant map data. The relevant sensor data and relevant map data are fed to a regulator for interpreting the sensor and map data, wherein the regulator evaluates the sensor data and the map data and then issues an output signal which corresponds to the evaluation. In the regulator, an interpretation of the relevant sensor and map data is conducted on the basis of specific sets of rules, and the action specified by the regulator parametrizes a behavior to be observed on the basis of a recognized rule. The regulator forwards the output signal to a finite state machine. The finite state machine conducts a transition in a state space with pre-defined states, and issues information which is assigned to either a state or the transition.

Both approaches rely on rules which may be based on rules codified through laws and other legal provisions.

US 10,133,275 B1 describes a system that uses temporal logic - e.g., Linear Temporal Logic or Signal Temporal Logic - for generating trajectories of autonomous vehicles. Temporal logic formulas, such as Linear Temporal Logic (LTL), can be utilized to verify whether the possible trajectories satisfy rules of the road. The state of the environment and the autonomous vehicle can be represented in such formal logic.

US 10,372,130 B1 describes communicating reasons for vehicle actions. Techniques for communicating feedback to passengers of autonomous vehicles regarding reasons for actions taken by autonomous vehicles to build trust with passengers are described herein. For instance, an autonomous vehicle may associate various objects with symbols and/or predicates while traversing a path to evaluate Linear Temporal Logic (LTL) formulae. Events along the path may require the autonomous vehicle to perform an action. The vehicle may determine to communicate the event and/or action to the passenger to provide a reason as to why the autonomous vehicle took the action, based on evaluation of the LTL formulae. In some examples, the autonomous vehicle may communicate with passengers via one or more of visual cues, auditory cues, and/or haptic cues. In this way, autonomous vehicles may build trust with passengers by reassuring and informing passengers of reasons for taking actions either before, during, or after the action is taken. While determining vehicle actions, a "cost" associated with different actions can be determined. Compliance with traffic rules is one example for such a cost factor.

In his conceptual work, Henry Prakken, On the problem of making autonomous vehicles conform to traffic law, Artificial Intelligence and Law, 25(3):341-363, states that (traffic) rules have a clear conditional and deontic structure.

Bhuiyan, H., Governatori, G., Rakotonirainy, A., Bond, A., Demmel, S., and Islam, M. B., Traffic rules encoding using defeasible deontic logic in Proceedings of JURIX 2020: 33rd International Conference on Legal Knowledge and Information Systems, pick up the idea of the deontic structure of traffic rules and suggest a concrete implementation of traffic rules in the form of Defeasible Deontic Logic (DDL) with Turnip (https://turnipbox.netlify.com, retrieved on 11.08.2022) for a reasoner. In DDL, the effects of traffic rules are stated as obligation (a certain behavior is obligatory), prohibition (a maneuver is disallowed), and permission (the autonomous moving vehicle, AV may perform certain actions). The authors construct a knowledge base comprising AV behavior and an environment ontology, whereby knowledge base facts of the environment (such as the presence or absence of certain lane markers or traffic signs) are gathered from a driving simulator. The traffic rules themselves are encoded as DDL in a presumably handcrafted translation process from their natural language originals in the traffic rule books.

Rather than DDL, Alves, G. V., Dennis, L., and Fisher, M., Formalisation and implementation of road junction rules on an autonomous vehicle modelled as an agent in Sekerinski, E., Moreira, N., Oliveira, J. N., Ratiu, D., Guidotti, R., Farrell, M., Luckcuck, M., Marmsoler, D., Campos, J., Astarte, T., Gonnord, L., Cerone, A., Couto, L., Dongol, B., Kutrib, M., Monteiro, P., and Delmas, D., editors, Formal Methods, FM 2019 International Workshops, pages 217-232, Cham, Springer International Publishing, propose to use temporal logic to formalize traffic rules and embed them into AVs in an agent-based architecture. The main focus is on traffic rules concerning traffic situations at intersections. Formalization of the traffic rules is done using (presumably handcrafted) grammar rules in Extended Backus-Naur Form (EBNF) style.

Rizaldi, A. and Althoff, M., Formalising traffic rules for accountability of autonomous vehicles in 2015 IEEE 18th International Conference on Intelligent Transportation Systems, pages 1658-1665, formalize traffic rules in Linear Temporal Logic (LTL) and verify them using the Isabelle theorem prover. The authors focus on a subset of traffic rules from the Vienna Convention on Road Traffic for highway scenarios.

Esterle, K., Gressenbuch, L., and Knoll, A. C., *Formalizing traffic rules for machine interpretability,* CoRR, abs/2007.00330, also formalize traffic rules in LTL, but focus on the German regulations of the StVO instead. Their work is concerned with traffic rules that are applicable to dual carriageways with a focus on regulations on speed, use of road and lanes, overtaking, safe distance, being overtaken, and priorities. The authors propose to separate rules into their premises and conclusions. For example, the rule "On motorways and motor roads, 'stopping is prohibited, including on verges" is transformed into on motorways (premise) and no stopping (conclusion) and then encoded in LTL.

Karimi, A. and Duggirala, P. S., Formalizing traffic rules for uncontrolled intersections in 2020 ACM/IEEE 11th International Conference on Cyber-Physical Systems (IC- CPS), pages 41-50, manually translate a subset of traffic rules (related to intersections) contained in the California driver handbook https://www.dmv.ca.gov/portal/handbook/california-driver-handbook/, retrieved on 11.08.2022) to formal language. The authors use the logic programming paradigm of Answer Set Programming (ASP) for the formalization of traffic rules.

Maierhofer, S., Rettinger, A.-K., Mayer, E. C., and Althoff, M., Formalization of interstate traffic rules in temporal logic in 2020 IEEE Intelligent Vehicles Symposium (IV), pages 752-759, formalize selected traffic rules of the German Road Traffic Regulation (StVO) and the Vienna Convention on Road Traffic in metric temporal logic (MTL). MTL allows to "specify an interval over which a property must be fulfilled'" and hence capture the temporal nature of traffic rules. Selected traffic rules in this work relate to traffic situations such as keeping a safe distance, avoiding unnecessary braking, adhering to speed limits, observing traffic flow, and others.

While above we presented work that focuses on temporal aspects of traffic rules with formalizations in temporal logic, Schwammberger, M. and Alves, G. V.

Extending urban multi-lane spatial logic to formalise road junction rules, arXiv preprint arXiv:2110.12583, address spatial aspects of rules as well by extending Urban Multi-lane Spatial Logic (Schwammberger, M., An abstract model for proving safety of autonomous urban traffic, Theoretical Computer Science, 744:143-169). Spatial aspects include, for example, a safe gap. As their motivating use case, the authors investigate road junction rules of the UK Highway Code.

So far, we summarized related work on the formalization of traffic rules that was relying on handcrafted traffic rules defined in various forms of formal logic. However, another interesting aspect of rule formalization is how to (partially) automate the generation of formal representations from their natural language variants present in the original rule books. While not in the domain of autonomous driving, He et al. and Singh et al. present approaches that might also be applied to traffic rules.

He, J., Bartocci, E., Nickovic, D., Isakovic, H., and Grosu, R., From english to signal temporal logic, CoRR, abs/2109.10294, introduce a method for converting natural language expressions into Signal Temporal Logic (STL). STL "allows to express real time requirements of continuous-time real-valued behaviors." The authors formulate the conversion of natural language requirements as a machine translation task and use a Transformer architecture (Vaswani, A., Shazeer, N., Parmar, N., Uszkoreit, J., Jones, L., Gomez, A. N., Kaiser, L. u., and Polosukhin, I., Attention is all you need in Advances in Neural Information Processing Systems 30, pages 5998-6008) for implementation. The field of application is the analysis of requirements of cyber-physical systems.

In a similar vein, Singh, H., Aggarwal, M., and Krishnamurthy, B., Exploring neural models for parsing natural language into first-order logic, CoRR, abs/2002.06544, present a system that investigates translations from English sentences into first-order logic (FOL). The authors cast the generation of FOL as a sequence-to-sequence task using an LSTM-based encoder-decoder architecture.

For autonomous vehicles (AVs) rather than human drivers Shalev-Shwartz, S., Shammah, S., and Shashua, A., On a formal model of safe and scalable self-driving cars, CoRR, abs/1708.06374, introduced the Responsibility-Sensitive Safety (RSS) model. This model formalizes a minimal set of five "common sense" traffic rules that are claimed to allow for collision-free driving when followed by all AVs. One of these minimalistic rules, for example, states that "right-of-way is given, not taken."' While true, the RSS model does not formalize when AVs actually have the right of way, a notion that, e.g., varies from country to country.

Known methods tackle this challenge by defining traffic rules in formal logic, which can then be used by AVs to check if, e.g., they have the right of way, if a lane change is permissible, etc.

However, known methods propose processes where traffic rules are manually translated from their natural language formulations to formal logic. This manual translation of traffic rules is not scalable, though, and requires human experts to handcraft formal logic representations of traffic rules.

It is desirable to provide a system that allows to automatically translate natural language traffic rules into formal logic. The standard rule books (e. g. national laws and legal provisions) designed for human drivers are meant to be the basic inputs to the provided system.

The development of a solution to provide such a system is based on the following considerations.

The system leverages the language understanding capabilities of large pre-trained language models such as T5 (Raffel, C., Shazeer, N., Roberts, A., Lee, K., Narang, S., Matena, M., Zhou, Y., Li, W., and Liu, P. J., Exploring the limits of transfer learning with a unified text-to-text transformer, Journal of Machine Learning Research, 21(140)-1-67), GPT-3 (Brown, T., Mann, B., Ryder, N., Subbiah, M., Kaplan, J. D., Dhariwal, P., Neelakantan, A., Shyam, P., Sastry, G., Askell, A., Agarwal, S., Herbert-Voss, A., Krueger, G., Henighan, T., Child, R., Ramesh, A., Ziegler, D., Wu, J., Winter, C., Hesse, C., Chen, M., Sigler, E., Litwin, M., Gray, S., Chess, B., Clark, J., Berner, C., McCandlish, S., Radford, A., Sutskever, I., and Amodei, D., Language models are few-shot learners in Larochelle, H., Ranzato, M., Hadsell, R., Balcan, M. F., and Lin, H., editors, Advances in Neural Information Processing Systems, volume 33, pages 1877-1901, Curran Associates, Inc), OPT (Zhang, S., Roller, S., Goyal, N., Artetxe, M., Chen, M., Chen, S., Dewan, C., Diab, M., Li, X., Lin, X. V., Mihaylov, T., Ott, M., Shleifer, S., Shuster, K., Simig, D., Koura, P. S., Sridhar, A., Wang, T., and Zettlemoyer, L., OPT: Open pre-trained transformer language models*),* or MT-NLG (Smith, S., Patwary, M., Norick, B., LeGresley, P., Rajbhandari, S., Casper, J., Liu, Z., Prabhumoye, S., Zerveas, G., Korthikanti, V., Zheng, E., Child, R., Aminabadi, R. Y., Bernauer, J., Song, X., Shoeybi, M., He, Y., Houston, M., Tiwary, S., and Catanzaro, B., Using deepspeed and megatron to train megatron-turing NLG 530b, A large-scale generative language model, CoRR, abs/2201.11990) for bootstrapping formal representations of traffic rules.

We envision a human-in-the-loop scenario where our system takes natural language traffic rules as inputs and generates formal representations of these rules in a best-possible manner. Since some traffic rules may be hard to encode in formal representations even for humans, we believe a human expert will be needed in the downstream process to review and fine-tune the generated formal representations of traffic rules in order for them to be used in AVs.

A goal for the proposed system is to tackle the "open problem" (Wellhausen, L. and Jacob, M. G., Map-optimized probabilistic traffic rule evaluation in 2016 IEEE/RSJ International Conference on Intelligent Robots and Systems (IROS), pages 3012-3017) of creating representations in formal logic from natural language traffic rules, a challenge that was "beyond the scope of [their] paper."' While previous work has concerned itself with manual approaches to encoding traffic rules, a system that automatically encodes natural language traffic rules into a formal system in the domain of automated driving is not known until now.

A first aspect of the invention relates to a method for preparing a machine learning system for translating natural language traffic rules into formal logic representations for autonomous moving (or driving) vehicles. The machine learning system comprises a (large) pre-trained language model which has been trained on large volumes of text data to assign probabilities to sequences of words. The machine learning system is prepared by one of the following alternatives:
i. The pre-trained language model is used for prompting in the following way:
   - input for the pre-trained language model are natural language instructions and language traffic rules,
   - a number (e.g. five or ten) of inputs and corresponding formal logic target outputs are presented as (few shot) examples to the machine learning system so that the machine learning system will learn to generate a formal logic traffic rule when prompted with natural language instructions and a natural language traffic rule.
ii. The machine learning system is fine-tuned using training data comprising language traffic rules as training input and corresponding formal logic traffic rules as target output for the pre-trained language model (or the machine learning system, respectively).
The language traffic rules comprise natural language rules and/or synthetic language traffic rules.

Fine-tuning may be performed relying on a supervised learning method or a similar method. Parameters of the machine learning system can be adapted through minimization of a loss function which characterizes the deviation of an output generated from the machine learning system when fed with a language traffic rule as an input from the corresponding (target) output known from the training data. A deviation threshold can be defined that when it is reached during training will end the training process.

The machine learning system may comprise a neural network, a recurrent neural network, a gated recurrent neural network or a long-short term memory (LSTM). The neural network may have an encoder-decoder architecture. A concrete example is the Transformer architecture presented by Vaswani et al. cited above.

Large volumes of text data may comprise more than 1 million or more than 1 billion tokens. Examples of pre-trained language models that have been trained on large volumes of text data ("large" pre-trained language models) have been discussed above (T5 by Raffel et al., GPT-3 by Brown et al., OPT by Zhang et al. and MT-NLG by Smith et al.).

According to an embodiment, the pre-trained language model is used for prompting. During preparation a number of training input and corresponding (desired) formal logic target output is presented as ("few shot") examples to the machine learning system so that the machine learning system will adapt during inference time to generate a formal logic traffic rule (expression) when prompted with natural language instructions and a natural language traffic rule.

In one example, the natural language instructions comprise the request to produce a corresponding formal traffic rule for a certain language traffic rule which is provided as an input to the machine learning system.

In one example, the pre-trained language model is used for prompting and the inputs comprise synthetic or pseudo-natural language rules.

According to another embodiment, the pre-trained language model is fine-tuned by providing pairs of language traffic rules and the corresponding (desired) formal logic traffic rules to the machine learning system so that the machine learning system will learn to generate a formal logic traffic rule when fed with a natural language traffic rule as input after completion of the fine-tuning training.

In an example, the training data used for fine-tuning the model comprises generated formal logic traffic rule representations and corresponding synthetic language traffic rules.

In an example, the corresponding synthetic language traffic rules are used to generate corresponding pseudo-natural language rules.

In an example, the synthetic or pseudo-natural language traffic rules are augmented with existing datasets comprising natural language traffic rules and (predetermined, e.g. by a human defined, corresponding / ground truth) formal logic traffic rule representations.

In an example, formal logic traffic rules (representations) comprise atomic propositions and implications and optionally also Boolean operations.

A second aspect of the invention relates to a machine learning system configured to translate natural language traffic rules into formal logic traffic rules (representations) for autonomous driving, wherein the machine learning system has been prepared using a method according to the first aspect of the invention.

A third aspect of the invention relates to a method for translating natural language traffic rules from a written law applicable in one geographic region into formal logic traffic rules (representations) using a machine learning system prepared according to the second aspect of the invention. The machine learning system is configured to produce formal logic representations of the traffic rules applicable in the geographic region. The method may be implemented in a computer or a suitable processing unit.

A fourth aspect of the invention relates to a system for an autonomous moving (in particular driving) vehicle comprising a processing unit. The processing unit is configured to process data from at least one sensor sensing the surroundings of the vehicle (e.g. a camera, radar or lidar sensor) for controlling the autonomous motion (or driving) of the vehicle. Controlling the autonomous moving vehicle is based on the processed sensor data while taking into account the produced formal logic representations of the traffic rules applicable in the geographic region where the vehicle is currently moving by employing the method according to the third aspect of the invention.

A fifth aspect of the invention relates to an autonomous moving vehicle comprising the system according to the fifth aspect of the invention.

Examples how the produced formal logic representations of the traffic rules can be taken into account are derivable for a person skilled in the art from the patent prior references presented in the introductory part.

Using the presented possibility for an automation of the translation of traffic rules into formal logic, the generated formal rules could then be used e.g. along the lines of US 10,133,275 B1 to guide the navigation of autonomous vehicles or along the lines of US 10,372,130 B1 for communicating reasons for AV behavior back to users.

The processing unit may correspond to a micro controller or a microprocessor, a CPU, central processing unit), a GPU, graphics processing unit, a TPU, tensor processing unit, an NPU, neural processing unit) a digital signal processor (DSP), an ASIC, application specific integrated circuit), an FPGA, field programmable gate array) or the like and may comprise software for performing steps of the method.

A geographic region may be a state or a country where specific traffic laws apply. The current region where the vehicle is driving may be obtained through a navigation system or other type of localization device of the vehicle.

A fifth aspect relates to an autonomous driving vehicle comprising a system according to the fourth aspect of the invention.

Further variants and embodiments are presented in the following paragraphs.

The proposed system may have the following characteristics:
1. The system operates on **traffic rules formulated in natural language.**
2. The system generates **synthetic traffic rule examples.** Such examples are created by first generating their form in formal logic - following a templating approach (He at al.) - and then by leveraging large pre-trained language models -- such as T5 (Raffel et al.), GPT-3 (Brown et al.), OPT (Zhang et al.), or MT-NLG (Smith et al.) - for converting formal logic templates to natural language, so that pairs of *(formal logic, natural language)* are generated.
   Synthetic traffic rule examples are applied either
   a. in a **prompting approach** where they are used for instructing the model, or
   b. in a **fine-tuning approach** where they are used for fine-tuning large pre-trained language models.
3. The system uses a **neural network,** e.g. with a Transformer architecture (Vaswani et al.) as its underlying architecture, and builds **on large pre-trained language models** for transforming natural language traffic rules to formal logic.
4. The system outputs representations of **traffic rules in form of formal logic.**

In the following, these aspects are described in detail.
Fig. 1 shows a flow chart for the overall approach and
Fig. 2 shows a flow chart for generating and improving training data comprising synthetic language and formal logic traffic rule pairs.

### 1. Traffic rules formulated in natural language as inputs

As of today, traffic rules are formulated in natural language for humans to read. Examples of traffic rule books are the Road Traffic Regulations (Stralßenverkehrsordnung; StVO in Germany: https://www.gesetze-im-internet.de/stvo 2013/StVO.pdf, retrieved on 11.08.2022, the Highway Code in England, Scotland and Wales: https://www.gov.uk/guidance/the-highwav-code, retrieved on 11.08.2022, and the California Driver Handbook in California, U.S: https://www.dmv.ca.gov/portal/handbook/california-driver-handbook/, retrieved on 11.08.2022. These regulations govern the rights and obligations of all road users.

Traffic rules range from very general rules to highly specific ones that regulate very specific traffic situations. As to the nature of traffic rules, Henry Prakken states that "[traffic] rules have a clear conditional and deontic structure," while Esterle et al. challenge this clear-cut assumption by stating that in fact "traffic rules are fuzzy and not well defined." We argue that in fact the nature of traffic rules varies significantly, and the suggested system for translating traffic rules into representations in form of formal logic may indeed work better for rules that exhibit a clear "conditional and deontic structure."

Overall, we propose a system that operates directly on such standard traffic rules from the standard rule books, whereby we limit our system to processing rules that have a clear "conditional and deontic structure."

### 2. Generation of synthetic examples by means of templating and using large pre-trained language models

We propose to generate synthetic examples of traffic rules in the following way. He et al. introduced a templating approach to compile rules in formal logic based on tiered composition layers. These layers range from atomic propositions over Boolean combinations to temporal phrases and nested temporal phrases. In our case, we adopt the core idea and propose a similar approach for traffic rules.

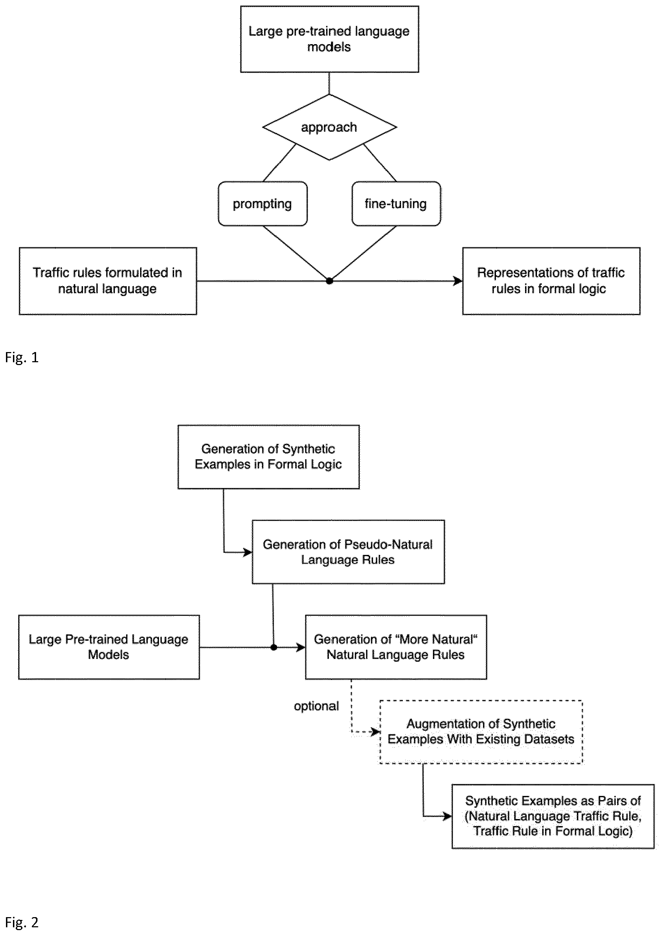

An illustration of the following steps is shown in Fig. 2.

### a. Generation of Synthetic Examples in Formal Logic

Examples for a basic grammar could look like this:

| | | |
|---|---|---|
| Atomic propositions *α*: | | at (vehicle, T-intersection) |
| | | at (vehicle, red traffic light) |
| | | on (vehicle, right-most lane) |
| | | turn (vehicle, left) |
| Boolean operations: | | P := *α* \| ¬ *α* \| *α* ∧ *α* \| *α* ∨ *α* |
| | at (vehicle, T-intersection) ∧ turn (vehicle, left) | |
| | on (vehicle, right-most lane) ∧ at (vehicle, red traffic light) | |
| | ^{┐} at (vehicle, red traffic light) | |
| Implications: P ⇒ P | | |
| | ^{┐} at (vehicle, red traffic light) ⇒ ^{┐} stoppingRequired | |

Once a catalog of atomic prepositions *α* and constraints on Boolean operations (e.g., on how deep phrases can be nested) have been established, synthetic traffic rules can get generated automatically in formal logic.

We emphasize that the formal rules are generated by a random generator that does not check if the generated rules conform to sensible traffic rules. This is not necessary since the synthetic examples are rather used to align the language models with their formal logic counterparts and it is irrelevant whether or not the synthetic examples are sensible in this stage.

### b. Generation of Pseudo-Natural Language Rules

Once done, we also need to define conversion steps that transform formal logic expressions into natural language expressions. For example:

| | | |
|---|---|---|
| Atomic propositions *α*: | at (x, y) | "x is at y" |
| | turn (x, direction) | "x turns direction" |
| | stoppingRequired | "stopping is required" |
| Boolean operations: | ∧ | "and" |
| | ^{┐} | "not" |
| Implications: | P ⇒ P | "If P, then P" |

In consequence, the following rule could be transformed into a - admittedly, somewhat grammatically incorrect - natural language expression:

| | |
|---|---|
| Input: | ^{┐} at (vehicle, red traffic light) ⇒ ^{┐} stoppingRequired |
| Output: | If not vehicle is at red traffic light, then not stopping is required |

### b. Generation of "More Natural" Natural Language Rules

We propose to leverage large pre-trained language models such as T5 (Raffel et al.), GPT-3 (Brown et al.), OPT (Zhang et al.), or MT-NLG (Smith et al.) for generating paraphrases of the rules generated above. By employing large pre-trained language models, we can for example get a set of outputs like illustrated below. Since all of these outputs are meant to be semantically equivalent, we can map them onto the same formal expression.

Input: *If not vehicle is at red traffic light, then not stopping is required.*

Outputs:
(1) *If a vehicle is not at a red traffic light, then stopping is not required.*
*(2) Stopping is not required if the vehicle is at a red traffic light.*

Thus, pairs of *(formal logic, natural language)* can be formed by taking the original example in formal logic (see above) and its generated natural language expression. For example:
Example 1: ^{┐} at (vehicle, red traffic light) ⇒ ^{┐} stoppingRequired
   *If a vehicle is not at a red traffic light, then stopping is not required.*
Example 2: ^{┐} at (vehicle, red traffic light) ⇒ ^{┐} stoppingRequired
   *Stopping is not required if the vehicle is at a red traffic light.*

### c. Augmentation of synthetic examples with existing datasets

In addition to these generated synthetic examples, we can further combine our synthetic dataset with traffic rules as pairs of *(formal representation, natural language)* found in the literature.

For example, we could augment our dataset with traffic rules proposed by Karimi and Duggirala.

### 3. Large pre-trained language models using neural networks for translating traffic rules into formal representations

Large pre-trained language models such as T5 (Raffel et al.), GPT-3 (Brown et al.), OPT (Zhang et al.), or MT-NLG (Smith et al.) are the foundation of many of today's language processing applications.

Such models, also referred to as *foundation models* (Bommasani, R., Hudson, D. A., Adeli, E., Altman, R., Arora, S., von Arx, S., Bernstein, M. S., Bohg, J., Bosselut, A., Brunskill, E., Brynjolfsson, E., Buch, S., Card, D., Castellon, R., Chatterji, N. S., Chen, A. S., Creel, K., Davis, J. Q., Demszky, D., Donahue, C., Doumbouya, M., Durmus, E., Ermon, S., Etchemendy, J., Ethayarajh, K., Fei-Fei, L., Finn, C., Gale, T., Gillespie, L., Goel, K., Goodman, N. D., Grossman, S., Guha, N., Hashimoto, T., Henderson, P., Hewitt, J., Ho, D. E., Hong, J., Hsu, K., Huang, J., Icard, T., Jain, S., Jurafsky, D., Kalluri, P., Karamcheti, S., Keeling, G., Khani, F., Khattab, O., Koh, P. W., Krass, M. S., Krishna, R., Kuditipudi, R., and et al., On the opportunities and risks of foundation models, CoRR, abs/2108.07258), build on the Transformer architecture (Vaswani et al.) and are "trained on broad data at scale" (Bommasani et al.) to learn a general sense of language understanding before getting adapted to the tasks and data at hand. Data uses for training often encompasses encyclopedic knowledge (e.g., Wikipedia), books corpora, and publicly available data crawled from the Web.

Most previous work in the field of autonomous driving focused on manually translating traffic rules into formal representations. However, He et al. and Singh et al. present approaches that might also be applied to traffic rules, with the former system also building on a Transformer architecture.

In contrast to He et al., we propose to leverage the language understanding capabilities of large pre-trained language models for translating natural language traffic rules into formal representations.

Given those models, pairs of *(formal logic, natural language),* generated in Step 2, can then be used as for both, *prompting* the model or for *fine-tuning* it.

### i. Prompting Approach

In the Prompting Approach, we use these synthetic examples to elicit formal representations from the language model.

At inference time, the model is provided with instructions such as *"Translate the following traffic rule into formal logic: The speed limit in any alley is 15 mph."* along with a set of 1...n synthetic examples (n >= 1) of traffic rules and their counterparts in formal logic.

These examples are meant to guide and instruct the model when generating its output. With prompting, the model is expected to provide the desired output at the end of the prompt.

### ii. Fine-Tuning Approach

In the fine-tuning approach, we use these synthetic examples for fine-tuning the large pre-trained language model rather than prompting it.

At inference time, the model is provided solely with the natural language traffic rule that is to be transformed into formal logic.

The fine-tuned model will then generate formal logic in a typical sequence-to-sequence fashion without having been provided with prompting instructions.

### 4. Representations of traffic rules in formal logic

In his conceptual work, Henry Prakken discusses three design approaches to making autonomous vehicles conform to traffic law: *regimentation, training,* and *reasoning.* Regimentation refers to model-checking capabilities that in every situation allow the AV to check whether or not its current actions comply to given traffic rules. Training, on the other hand, refers to the practice of exposing an AV during a training phase to as many diverse traffic situations as possible, so that the AV can implicitly learn how to conform to traffic law. Reasoning is similar to regimentation, but goes further in that it equips the AV with "normative reasoning capabilities" about its current actions and a given set of traffic rules. For reasoning to be reliable, Henry Prakken concludes that a formal representation of traffic rules is a necessary prerequisite. As to the nature of such formal representations, the author states that "[traffic] rules have a clear conditional and deontic structure."

Prior work on formally representing traffic rules encode rules in various formal systems such as first-order logic (Wellhausen and Jacob), temporal logic (Alves et al.; Rizaldi and Althoff; Esterle et al.; Maierhofer et al.; He et al.), spatial logic (Schwammberger and Alves), answer set programming (Karimi and Duggirala), or defeasible deontic logic (Bhuiyan et al.). We argue that the concrete system of formal logic that we translate natural language traffic rules into depends on the chosen downstream usage scenario and application needs.

Generally, we propose to keep the system of formal logic as simple as the downstream usage scenario and application needs allow. For example, if we follow the idea of a *Behavior-Semantic Scenery Description* (BSSD; Glatzki, F., Lippert, M., and Winner, H., Behavioral attributes for a behavior- semantic scenery description (bssd) for the development of automated driving functions in 2021 IEEE International Intelligent Transportation Systems Conference (ITSC), pages 667-672) for traffic situations, we can decompose traffic situations into sequences of atomic traffic segments. Within each of these segments, we don't need any temporal component in our system of formal logic since each segment is an atomic temporal unit. For that reason, temporal logic may be unnecessarily expressive when BSSD is used. Likewise, spatial logic may be unnecessarily expressive when BSSD is chosen as a modeling approach, since each segment is atomic not only from a temporal point of view, but also from a spatial point of view.

The presented solution provides the following advantages:
1. Bootstrapping automatic translations of traffic rules from standard rulebooks formulated in natural language into formal representations.
2. Leveraging large pre-trained language models, i.e., foundation models, for translating traffic rules - no need to train a Transformer model from scratch.
3. Formal representations of traffic rules equip autonomous vehicles with "normative reasoning capabilities." (Henry Prakken)
4. Different jurisdictions (and hence, different sets of traffic rules) or new sets of rules (e.g., revisions of the traffic laws) can be accounted for by autonomous vehicles with swapping in/out the relevant formal representations.
5. Improved interpretability of traffic rules for autonomous vehicles since logic clauses are free of ambiguitiy.

Embodiments of the invention can be useful wherever autonomous navigation decisions are made in spaces where traffic rules apply. In the scope of the invention, autonomous vehicles could also be, for example, last-mile delivery robots or drones.

In the following we give a concrete end-to-end embodiment of how the invention can be used to translate traffic rules from the official rule books formulated in natural language to formal representations in formal logic.

### 1. Traffic rules formulated in natural language as inputs

In this example, we illustrate the translation of a traffic rule taken from the *Laws and Rules of the Road* section of the California Driver Handbook.

Traffic rule: *The speed limit in any alley is 15 mph.*

This rule has a clear "conditional and deontic structure." (Henry Prakken) and hence can be considered a valid input according to our definition of which rules the system supports.

### 2. Generation of synthetic examples by means of templating and using large pre-trained language models

Following the procedure described previously, we define a set of *few-shot examples* that can be used for *prompting* or *fine-tuning* the large pre-trained language model.

Few-shot examples that are semantically related to our traffic rule under study are supposedly preferable to less relevant ones.

Examples pairs of *(natural language traffic rule, formal representation)* comprising our few-shot examples may include:
*"If a vehicle is on the right-most lane, the speed limit is 40."*
→ on (vehicle, right-most lane) -> speedLimit (40)
*"The speed limit is 10 for* a *vehicle in a school zone."*
→ in (vehicle, school zone) -> speedLimit(10)

### 3. Large pre-trained language models using neural networks for translating traffic rules into formal representations

Fig. 1 shows a flow chart of a general approach for translating traffic rules into formal representations. In this end-to-end example, we illustrate how the invention can be used to translate traffic rules from the official rule books formulated in natural language to formal representations in formal logic.

As a basis for the system, we propose to experiment with different large pre-trained language models to identify one that exhibits the best performance. Examples of large pre-trained language models include T5 (Raffel et al.), GPT-3 (Brown et al.), OPT (Zhang et al.), or MT- promising NLG (Smith et al.). In an initial set of exploratory studies, GPT-3 already showed first results.

### i. Prompting Approach

An example prompt for the large pre-trained language model could be as follows:
Prompt: Please translate the traffic rule into formal logic.

| | |
|---|---|
| Traffic rule: | *If a vehicle is on the right-most lane, the speed limit is 40.* |
| Formal logic: | on (vehicle, right-most lane) -> speedLimit (40) |
| Traffic rule: | *The speed limit is 10 for* a *vehicle in a school zone.* |
| Formal logic: | in (vehicle, school zone) -> speedLimit(10) |
| Traffic rule: | *The speed limit in any alley is 15 mph.* |
| Formal logic: | |

We expect the language model to fill the blank after the last "Formal logic" label.

### ii. Fine-tuning Approach

In the fine-tuning approach, we use the synthetic examples of (2) for optimizing the parameters of a large pre-trained language model.

We then apply the optimized - i.e., *fine-tuned* - model in a classical sequence-to-sequence translation task, where the input is a natural language traffic rule, and the model is expected to translate this rule into formal logic. For example:

```
 If a vehicle is on the right-most lane, the speed limit is 40.
 ↓
 [Optimized Model]
 ↓
 on (vehicle, right-most lane) -> speedLimit (40)
```

Fig. 2 shows how to define a set of synthetic examples that can be used for *prompting* or *fine-tuning* large pre-trained language models.

### 4. Representations of traffic rules in formal logic

Henry Prakken concludes that a formal representation of traffic rules is a necessary prerequisite. Prior work on formally representing traffic rules encode rules in various formal systems such as first-order logic (Wellhausen and Jacob), temporal logic (Alves et al.; Rizaldi and Althoff; Esterle et al.; Maierhofer et al.; He et al.), spatial logic (Schwammberger and Alves), answer set programming (Karimi and Duggirala), or defeasible deontic logic (Bhuiyan et al.).

As discussed above, we argue that the concrete system of formal logic that we translate natural language traffic rules into depends on the chosen downstream usage scenario and application needs.

## Claims

1. Method for preparing a machine learning system for translating natural language traffic rules into formal logic representations for autonomous moving vehicles, wherein the machine learning system comprises a pre-trained language model which has been trained on large volumes of text data to assign probabilities to sequences of words, wherein preparation of the machine learning systems comprises
either
the pre-trained language model is used for prompting in the following way: input for the pre-trained language model are natural language instructions and language traffic rules,
presenting a number of inputs and corresponding formal logic target outputs as examples to the machine learning system so that the machine learning system will learn to generate a formal logic traffic rule when prompted with natural language instructions and a natural language traffic rule;
or
the machine learning system is fine-tuned using training data comprising language traffic rules as training input and corresponding formal logic traffic rules as target output for the pre-trained language model;
wherein the language traffic rules comprise natural language rules and/or synthetic language traffic rules.

2. Method according to claim 1, wherein the pre-trained language model is used for prompting and wherein the natural language instructions comprise the request to produce a corresponding formal traffic rule for a certain language traffic rule.

3. Method according to claim 1 or 2, wherein the pre-trained language model is used for prompting and wherein the inputs comprise synthetic or pseudo-natural language rules.

4. Method according to claim 1, wherein the pre-trained language model is fine-tuned by providing pairs of language traffic rules and the corresponding formal logic traffic rules to the machine learning system so that the machine learning system will learn to generate a formal logic traffic rule when fed with a natural language traffic rule as input after completion of the fine-tuning training.

5. Method according to claim 4, wherein the training data used to fine-tune the model comprises generated formal logic traffic rule representations and corresponding synthetic language traffic rules.

6. Method according to claim 5 wherein the corresponding synthetic language traffic rules are used to generate corresponding pseudo-natural language rules.

7. Method according to claim 5 or 6 wherein the synthetic or pseudo-natural language rules are augmented with existing datasets comprising natural language traffic rules and formal logic traffic rule representations.

8. Method according to any one of the preceding claims, wherein formal logic comprises atomic propositions and implications and optionally also Boolean operations.

9. Machine learning system configured to translate natural language traffic rules into formal logic traffic rules for autonomous driving, wherein the machine learning system has been prepared using a method according to one of the claims 1 to 8.

10. Machine learning system according to claim 9, wherein the machine learning system comprises a neural network, a recurrent neural network, a gated recurrent neural network or a long-short term memory.

11. Machine learning system according to claim 9 or claim 10, wherein the machine learning system comprises an encoder-decoder architecture.

12. Machine learning system according to claim 11, wherein the machine learning system comprises a Transformer architecture.

13. Method for translating natural language traffic rules from a written law applicable in one geographic region into formal logic traffic rules using a machine learning system according to one of the claims 9 to 12, the machine learning system being configured to produce formal logic representations of the traffic rules applicable in the geographic region.

14. System for an autonomous moving vehicle comprising a processing unit wherein the processing unit is configured to process data from at least one sensor sensing the surroundings of the vehicle for controlling the autonomous driving of the vehicle based on the processed sensor data while taking into account the produced formal logic representations of the traffic rules applicable in the geographic region where the vehicle is currently driving by employing the method according to claim 13.

15. Autonomous moving vehicle comprising a system according to claim 14.
